# EUROPEAN PATENT APPLICATION

(11) **EP 4 400 998 A1**
(43) Date of publication of application: **17.07.2024**
(21) Application number: 24152236.6
(22) Date of filing: 16.01.2024
(51) Int. Cl.: G06F 30/3308, G06F 30/337, G06F 115/02, G06F 115/08, G06F 119/06, G06F 119/08

(54) **METHOD AND DEVICE WITH TARGET SYSTEM PERFORMANCE ESTIMATION**

(30) Priority: 16.01.2023 KR 20230006381
(71) Applicant: Samsung Electronics Co., Ltd., Suwon-si, Gyeonggi-do 16677 (KR)
(72) Inventor: KIM, Seongbeom, 16678 Suwon-si, Gyeonggi-do (KR); KANG, Jintaek, 16678 Suwon-si, Gyeonggi-do (KR)
(74) Representative: Arnold & Siedsma

(57) **Abstract**

An electronic device includes one or more processors configured to generate profile data on operations of target hardware among pieces of hardware in response to performing a workload in a first-level simulator for a system model combining the pieces of hardware, and output performance data of the target hardware in response to simulating the profile data in a second-level simulator for the target hardware.

## Description

### FIELD

The following description relates to a method and device with target system performance estimation.

### BACKGROUND

In the semiconductor foundry industry, manufacturers may manufacture semiconductor products designed by outside companies, and a manufacturer may check the performance of a designed semiconductor product through simulation performed by an electronic device, before manufacturing the designed semiconductor product. In this case, when a consignor requests a design change in a simulation process, the electronic device may consume an enormous amount of time in performing the simulation again, which may cause the manufacturer to lose time and money.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

According to an aspect of the present disclosure, an electronic device as defined in any of the claims 1-10 is provided.

According to another aspect of the present disclosure, a processor-implemented method as defined in any of the claims 11-14 is provided.

According to yet another aspect of the present disclosure, a non-transitory computer-readable storage medium as defined in claim 15 is provided.

Other features and aspects will be apparent from the following detailed description, the drawings, and the claims.

### BRIEF DESCRIPTION OF THE DRAWINGS

FIG. 1 illustrates an example of a system design.
FIG. 2 illustrates an example of a system performance estimation method.
FIG. 3 illustrates an example of performance estimation by using simulators.
FIG. 4 illustrates an example of a method of determining a specification of target hardware by using simulators.
FIG. 5 illustrates an example of a method of adjusting a specification of each piece of hardware by using profile data and a second-level simulator.
FIGS. 6, 7, and 8 illustrate examples of a redesign based on simulation and a combination of pieces of hardware by a workload.
FIGS. 9 and 10 illustrate examples of a configuration of an electronic device.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

Although terms, such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as being "connected to," "coupled to," or "joined to" another component or element, it may be directly (e.g., in contact with the other component or element) "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning. The use of the term "may" herein with respect to an example or embodiment, e.g., as to what an example or embodiment may include or implement, means that at least one example or embodiment exists where such a feature is included or implemented, while all examples are not limited thereto.

Unless otherwise defined, all terms, including technical and scientific terms, used herein have the same meaning as commonly understood by one of ordinary skill in the art to which the present disclosure pertains and based on an understanding of the disclosure of the present application. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

Hereinafter, the examples are described in detail with reference to the accompanying drawings. When describing the embodiments with reference to the accompanying drawings, like reference numerals refer to like elements and a repeated description related thereto will be omitted.

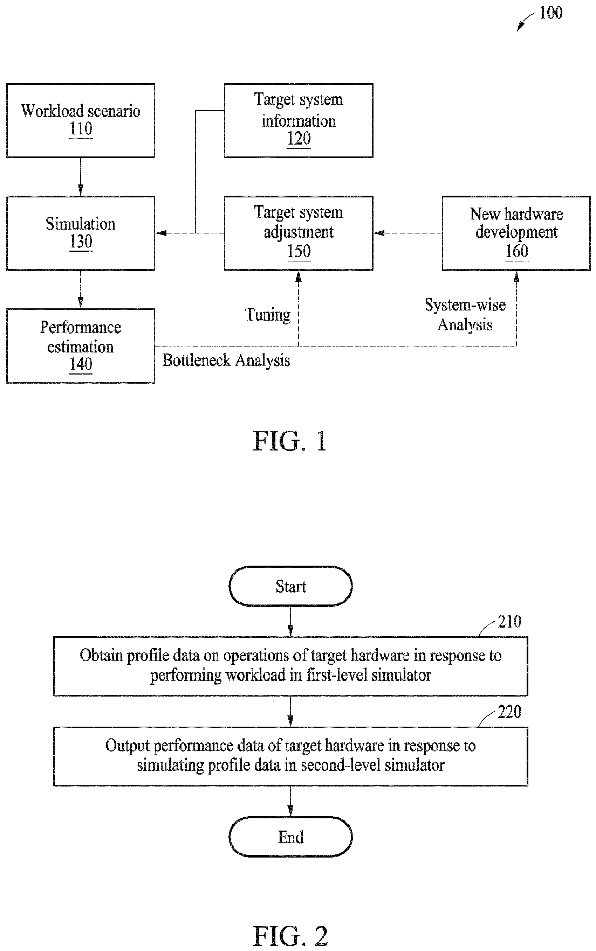

FIG. 1 illustrates an example of a system design.

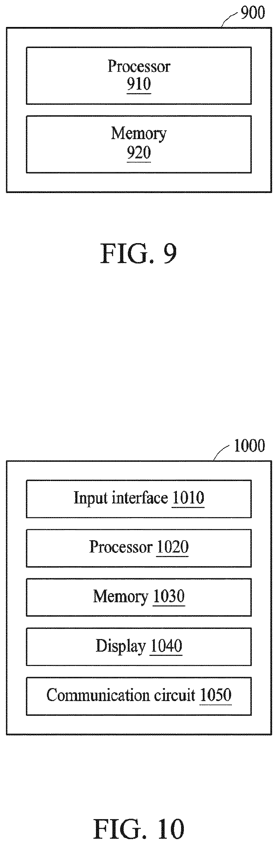

According to an embodiment, an electronic device (e.g., an electronic device 900 of FIG. 9 and/or an electronic device 1000 of FIG. 10) may perform a design 100 of a system (e.g., a target system) of desired performance. For example, the electronic device may determine a specification of hardware included in the target system for implementation of the target system that may execute an operation according to a workload scenario 110 with the desired performance. The workload scenario 110 may be a scenario including a series of instructions and/or operations to perform a desired task. The electronic device may receive a customer workload scenario as an input.

The electronic device may obtain target system information 120. For example, the electronic device may obtain the target system information 120 in response to an input of a user (e.g., a designer). The target system information 120 may include at least one of the number of pieces of hardware included in the target system set by the user, the types of the pieces of hardware, and an approximate specification of the pieces of hardware. For example, the target system for a database workload may include a memory and a storage as hardware components. As another example, the target system for a 3-dimensional (3D) rendering workload may include a processor and an accelerator as hardware components. In yet another example, the target system for an artificial intelligence (AI) rendering workload may include an accelerator and a memory as hardware components. However, the types of the pieces of hardware included in the target system for each workload are not limited to the foregoing examples and may vary depending on the user's selection.

The electronic device may perform simulation 130 based on the target system information 120 and the workload scenario 110. For example, the electronic device may set the target system information 120 for a simulator of the electronic device and execute the simulator according to the workload scenario 110. An example of the simulator being a program configured to simulate an operation of a system and/or an operation of a component (e.g., hardware) through software is mainly described herein. The simulator may be classified according to a level of the simulation 130. For example, a level of the simulator may be listed in an order of a system level, a cluster level, a rack level, a node level, a component level, and an intellectual property (IP) level. The level may decrease from the system level to the IP level. The simulator of a high level may simulate an operation of the system from a macro perspective, and the simulator of a low level may simulate the operation of the system from a micro perspective. For example, the simulator of the system level may simulate an operation approximated from a macro perspective by the system including pieces of hardware. The simulator of the IP level may simulate an operation of an individual piece of hardware included in the system from a micro perspective. As the level of the simulator decreases, the speed of the simulation 130 may decrease and a correlation with a semiconductor design may increase. Conversely, as the level of the simulator increases, the speed of the simulation 130 may increase and the correlation with the semiconductor design may decrease. For example, the simulator of the system level may perform an operating system (OS) and a workload at a high speed. The simulator of the IP level may set detailed information (e.g., a specific specification parameter) of a component of the IP level or a sub-component (e.g., hardware of the IP level) of the component and obtain a result thereof.

The electronic device may estimate the performance of the target system based on a result of the simulation 130. The electronic device may suggest target system adjustment 150 or new hardware development 160 based on performance estimation 140. For example, a bottleneck analysis may be performed on the performance estimation 140, and target hardware to be adjusted in the target system may be determined based on the bottleneck analysis. The electronic device may adjust a parameter of the target hardware that does not satisfy a target performance in response to a user input or perform the new hardware development 160 based on a system-wide analysis. The electronic device may determine a specification parameter value for the target hardware based on a comparison (e.g., a difference between the target performance and an estimated performance value of the performance estimation 140) between the target performance and the estimated performance value. The electronic device may suggest new hardware that is to be developed to satisfy the target performance by combining the specification parameter values . The electronic device may perform the simulation 130 on the adjusted target system. The electronic device may repeat the target system adjustment 150 and the simulation 130 that are described above until the target system satisfies the target performance. According to an embodiment, the electronic device may repeat a change (e.g., an increase or a decrease) of a performance value (e.g., a performance value desired to be designed) corresponding to a factor according to a change (e.g., an increase or a decrease) of a specification parameter of an individual piece of hardware through a closed loop. The electronic device may repeat the change of the specification parameter through a closed loop until the performance value reaches the target performance. For example, the electronic device may determine a specification parameter to be changed to achieve a target performance value among specifications of the target hardware and a change amount of the specification parameter by using a Monte Carlo simulation method or a machine learning method.

According to an embodiment, the electronic device may perform actual measurement for a scalable chip design. The electronic device of one or more embodiments may estimate the performance of the target system through the simulator described above even without a test board. The electronic device of one or more embodiments may accurately estimate performance even when companies using the target system are different or manufacturers of the pieces of hardware included in the target system are different. In addition, the electronic device of one or more embodiments may perform the performance estimation 140 considering an environment desired by a customer since the electronic device may estimate performance by each workload scenario 110 as described above. In addition, the electronic device may determine whether the performance (e.g., the target performance) desired by the customer is satisfied or may suggest a specification of hardware (e.g., processing in-memory (PIM) or an acceleration dual in-line memory module (AXDIMM)) of the IP level desired to satisfy a specification determined by the customer.

As will be described below in examples, the electronic device of one or more embodiments may rapidly and accurately estimate performance from a system perspective and a component perspective (e.g., an IP-level perspective) through the simulation 130 by using a simulator of a first level (e.g., the system level) and a simulator of a second level (e.g., the IP level) that is lower than the first level. Although an example of the first level being the system level and the second level being the component level or the IP level is mainly described herein, examples are not limited thereto.

FIG. 2 illustrates an example of a system performance estimation method.

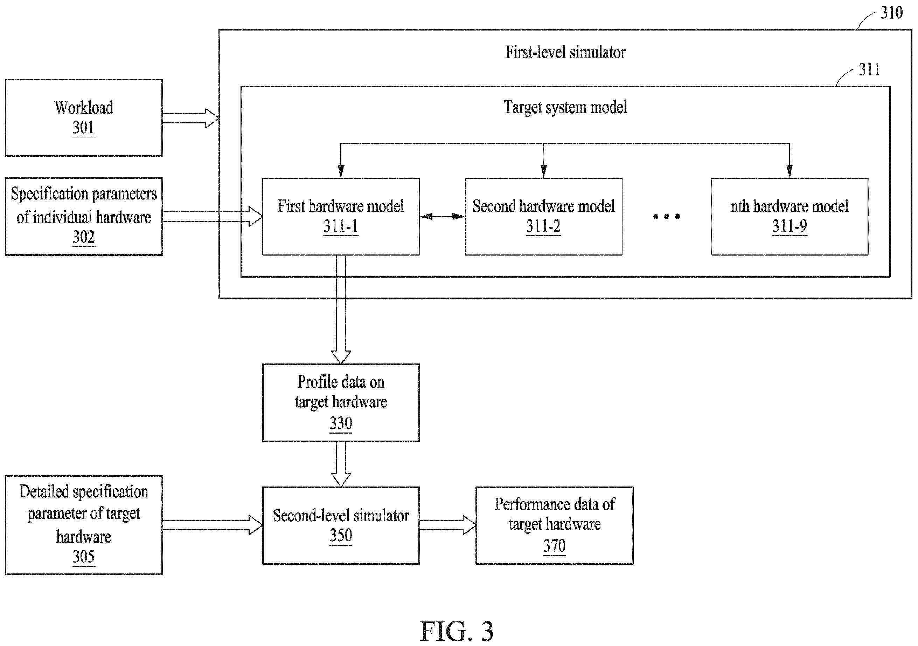

In operation 210, an electronic device (e.g., a processor 910 of the electronic device 900 of FIG. 9 and/or a processor 1020 of the electronic device 1000 of FIG. 10) may obtain (e.g., generate or determine) profile data on operations of target hardware in response to performing a workload in a first-level simulator. For example, the electronic device may set an approximate specification of an individual piece of hardware included in a system model of the first-level simulator in response to a user input in the first-level simulator. A system model may be a model that models a target system at a first level and may also be referred to as a target system model. The electronic device may simulate operations according to the workload in the target system by applying the workload (e.g., a workload scenario according to a customer request) described above to the first-level simulator of which an approximate specification is set. The electronic device may generate profile data for each piece of hardware by monitoring a distribution of requests for performing the operations according to the workload to individual pieces of hardware in first-level simulation. The profile data on a piece of hardware may be data that profiles an operation requested to the piece of hardware according to the execution of the workload in the target system model, an example of which is described in detail below with reference to FIG. 3.

In operation 220, the electronic device may generate and output performance data of the target hardware in response to simulating the profile data in a second-level simulator. For example, the electronic device may specifically set a specification of an individual piece (e.g., the target hardware) of hardware. Although the electronic device may set a detailed specification of the target hardware based on a user input, examples are not limited thereto, and the detailed specification may be set and/or adjusted based on a performance estimation result to be described in an example below. The electronic device may simulate a second-level model (e.g., a target hardware model), in the second-level simulator, for the target hardware of which the detailed specification is set. For example, the electronic device may monitor the target hardware model performing operations according to the profile data. The electronic device may observe a factor (e.g., an operation time, consumed power, or a temperature) of the target hardware while monitoring a second-level simulation. The electronic device may generate the performance data by determining a performance value of the factor, based on values observed for an individual factor. An example of the performance data is described below with reference to FIG. 3.

According to an embodiment, the electronic device may store the first-level simulator and the second-level simulator (e.g., an IP-level simulator) in a memory (e.g., a memory 920 of FIG. 9 and/or a memory 1030 of FIG. 10). Examples of the first-level simulator and the second-level simulator are described in detail below with reference to FIG. 3.

FIG. 3 illustrates an example of performance estimation by using simulators.

According to an embodiment, an electronic device (e.g., the electronic device 900 of FIG. 9 and/or the electronic device 1000 of FIG. 10) may include a first-level simulator 310 and a second-level simulator 350. The electronic device may mimic operations of a target system through the first-level and second-level simulators 310 and 350 and estimate the performance of the target system based on a result of monitoring the mimicked operations.

The target system may be a system to which pieces of hardware are connected. A target system model 311 may be a model that models the target system and may be, for example, an approximated model of the target system. The target system model 311 may be a model that models a piece (e.g., hardware of an IP level) of hardware or a combination of the pieces of hardware (for example, a model that approximately models each piece of hardware, a connection between the pieces of hardware) and an interaction according to the connection between the pieces of hardware. A simulation model (e.g., a hardware model) that approximates an individual component (e.g., the hardware of the IP level) in the target system model 311 may be connected to another simulation model, which is similar to a connection of an actual, physical system. Referring to FIG. 3, a configuration of the target system model 311 including a first hardware model 311-1 and a second hardware model 311-2 to an nth hardware model 311-9 is illustrated as an example. Here, n may be an integer greater than or equal to 2. A program configured to execute the simulation model that approximates hardware may be referred to as a simulator. An interaction between the pieces of hardware may include, for example, the transmission of data and/or requests.

The first-level simulator 310 may be a simulator for a system model combining the pieces of hardware. The system model may be a model that models the pieces of hardware to an approximate specification from a system perspective. For example, an operation of an individual piece of hardware may be approximately modeled in the system model. A system-level simulator, as an example of the first-level simulator 310, may be a simulator that mimics, for example, data center equipment, a supercomputer, a computer, or a smartphone.

The first-level simulator 310 may execute an OS or workload 301. The first-level simulator 310 may perform simulation based on the workload 301 applied to the target system model 311. For example, the electronic device may set a specification (e.g., specification parameters 302) of the hardware included in the target system model 311 described above in the first-level simulator and input the executed workload 301. For reference, the types and/or number of the specification parameters 302 that are settable in an individual piece of hardware may be limited compared to an IP-level simulator. For example, the first-level simulator 310 may include, as the specification parameters 302 that are settable, at least one of capacity of a memory, capacity of a storage, the number of cores of a processor, the number of cores of an accelerator (e.g., a graphics processing unit (GPU)), and memory capacity of the accelerator. When the speed of simulation decreases as the types and number of the specification parameters 302 that are settable in an individual hardware model in the first-level simulator 310 increase, the types and number of the specification parameters 302 that are settable may be limited as described above.

The electronic device may execute the workload 301 in the target system model 311 through the first-level simulator 310. The workload 301 may include a series of instructions for a preset task. The first-level simulator 310 that receives the workload 301 as an input may simulate the processing of operations according to the workload 301 by a hardware model included in the target system model 311 and an interaction (e.g., the transmission and reception of data and/or requests) with another hardware model for the processing of each operation. The first-level simulator 310 may monitor operations requested to an individual hardware model among the pieces of hardware included in the target system model 311 according to the execution of the workload 301. The first-level simulator 310 may generate profile data 330 on the hardware model in response to monitoring the operations requested to the hardware model. The operations requested to the hardware model may include, for example, at least one of an access operation, a read operation, a write operation, and a wait operation for the individual hardware model.

For reference, due to a dynamic policy of the target system, operations for each piece of hardware according to the workload 301 of the target system may also dynamically change. The policy may change in real time through the OS or software (S/W) corresponding to the workload 301. The first-level simulator 310 may collect information (e.g., statistical data or quantified data) on the operations of the hardware model according to the workload 301 through the simulation described above.

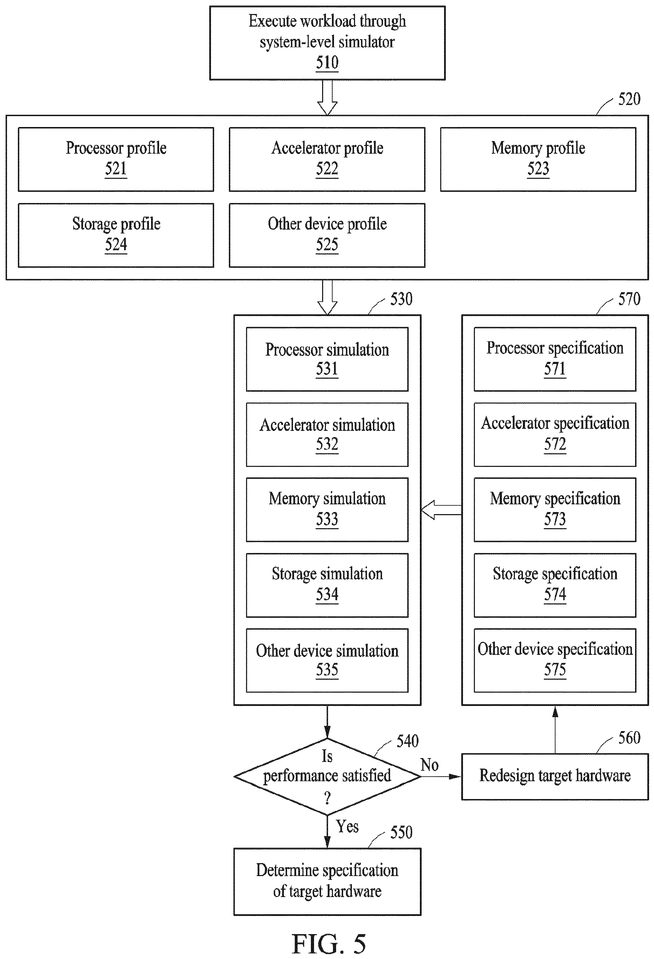

The profile data 330 on a piece of hardware may be data on an operation (e.g., the access operation, the read operation, the write operation, or the wait operation) requested to the hardware according to the execution of the workload 301 in the target system model 311 described above. For example, the target system model 311 may include a plurality of components (e.g., a central processing unit (CPU), a dynamic random access memory (DRAM), a GPU, etc. as hardware). The target system model 311 may include a plurality of memories. For example, the workload 301 may include 100 times of read operations for a memory device and 100 times of write operations for the memory device. As described above, due to the dynamic policy of the target system, how many read operations and write operations are performed in which memory device among a plurality of memory devices or how much latency is caused by components other than the memory device may not be fixed. As described above, by collecting the profile data 330 for each hardware model included in the target system model 311 through the first-level simulator 310, the electronic device of one or more embodiments may profile operations according to a workload scenario of the target hardware despite the dynamic policy. The collected profile data 330 may be transmitted in a file form to the second-level simulator 350, an example of which will be described below. An example of the profile data 330 collected for each hardware model is described below with reference to FIG. 5.

The second-level simulator 350 may be a simulator for the target hardware among the pieces of hardware described above. The second-level simulator 350 may be a simulator (e.g., the IP-level simulator or a component-level simulator) using a model (e.g., an IP-level model or a component-level model) that models the target hardware at the IP level or a component level. For example, the second-level simulator 350 may be a simulator that mimics a component of the target hardware or a sub-component (e.g., an IP component) included in the component and may be implemented as a register-transfer-level (RTL) simulator. The second-level simulator 350 may be variously implemented and may include a simulation model (e.g., a second-level model) designed to output a performance result of a profile data input. The second-level model may be implemented based on at least one of an RTL, a neural network, and various models. In the RTL simulator, operations of hardware may be simulated in a clock unit. The second-level simulator 350 may receive, as an input, specification parameters (e.g., detailed specification parameters 305) more specific than those of the first-level simulator 310. For example, all the specification parameters of the memory may be settable in the second-level simulator 350. For example, the detailed specification parameters 305 may include both the specification parameters 302 and additional specification parameters more specific than the specification parameters 302. The second-level model may include a plurality of specification parameters (e.g., the detailed specification parameters 305) for modeled target hardware. The specification parameters (e.g., the detailed specification parameters 305) may be reset. Examples of the specification parameters (e.g., the detailed specification parameters 305) settable for each type of hardware are described in detail below with reference to FIG. 5.

According to an embodiment, the second-level simulator 350 may simulate the profile data 330 described above in the second-level model (e.g., the IP level or the component level). The IP-level model may be a model that models the target hardware of the IP level. The second-level simulator 350 (e.g., the IP-level simulator) may receive an input according to an interface defined in the target hardware of the second level (e.g., the IP level) and simulate an operation of the target hardware according to the received input. The electronic device, by applying an input (e.g., a series of inputs) according to the profile data 330 in the second-level simulator 350 to the second-level model of the target hardware, may simulate operations of the target hardware through the second-level model. The electronic device may analyze, in time series, operations of the second-level model according to the profile data 330 in the second-level simulator 350 and results (e.g., a state of hardware) according to the operations.

The electronic device may generate, as an output, a result of analyzing the operations of the second-level model in time series. For example, the electronic device may estimate performance data 370 related to the performing of an operation (e.g., a read operation or a write operation) as an output of the second-level simulator 350. The electronic device may estimate the performance data 370 in response to monitoring the target hardware during simulation using the second-level simulator 350. As described above, the electronic device may determine performance values included in the performance data 370 in response to observing factors of the target hardware during the second-level simulation. The factors of the target hardware may include a time factor, a power factor, a temperature factor, and a failure factor. The electronic device may observe and/or measure factor values (e.g., an execution time of some operations, a power value, a temperature value, and a failure count) in multiple time points in time series during the second-level simulation. A performance value may be a value determined for each factor of the target hardware. For example, performance values may include the execution time for the time factor, a power consumption for the power factor, the temperature value for the temperature factor, and the number of failures for the failure factor.

The performance data 370 may include performance values for each factor. The performance values of the performance data 370 may include at least one of a time (a total execution time) taken to perform an operation according to the profile data 330, a power consumption while performing the operation, a temperature, and failure information (e.g., the number of failures). The total execution time may be a time totaling a time of performing a requested operation and a latency time (e.g., a wait time) caused by another component. The power consumption may be a statistical value (e.g., an average consumption, a minimum consumption, a maximum consumption, or a summed total consumption) of a consumption during simulation. The temperature may be a statistical value (e.g., an average temperature, a minimum temperature, or a maximum temperature) of values observed during the simulation. A failure rate may include a statistical value (e.g., a total failure number or an average failure number) of failures observed during the simulation.

Accordingly, the electronic device may determine a performance measure of the target hardware based on the performance data 370 as a result of the second-level simulation for the target hardware.

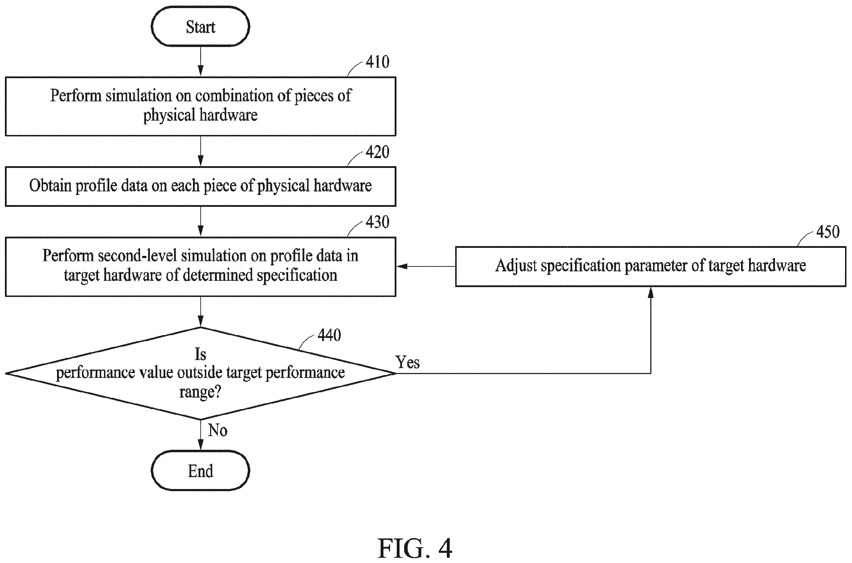

FIG. 4 illustrates an example of a method of determining a specification of target hardware by using simulators.

In operation 410, an electronic device (e.g., a processor 910 of the electronic device 900 of FIG. 9 and/or a processor 1020 of the electronic device 1000 of FIG. 10) may perform simulation (e.g., the first-level simulation of FIG. 3) on a combination of pieces of physical hardware. For example, the electronic device may execute a target system model according to a workload.

In operation 420, the electronic device may obtain profile data on each piece of physical hardware. For example, the electronic device may generate the profile data by monitoring that requests for performing the workload in a first-level simulator are distributed to the pieces of physical hardware according to a policy of a system model.

In operation 430, the electronic device may perform second-level simulation (e.g., the second-level simulation of FIG. 3) on the profile data in the target hardware of the determined specification. For example, the electronic device may determine a performance value of performance data in response to monitoring at least one of an operation time of the target hardware, operation power of the target hardware, an operation temperature of the target hardware, and a failure of the target hardware while operating the target hardware according to the profile data through a second-level simulator. The electronic device may determine a statistical value of values observed in time series while the target hardware is operated according to the profile data through the second-level simulator to be the performance value. An example of the performance value is described below with reference to FIG. 5.

In operation 440, the electronic device may determine whether the target hardware satisfies a target performance range based on calculated performance data. For example, the electronic device may determine whether the performance value of the performance data is included within the target performance range. According to an embodiment, the electronic device may determine whether the performance data satisfies target performance. For example, the electronic device may determine whether at least one performance value of the performance values included in the performance data is within the target performance range. The electronic device may determine that the target hardware includes the target performance when the at least one performance value (e.g., a performance value of the performance of interest) is within the target performance range. As another example, the electronic device may determine whether one or more performance values of the performance values included in the performance data are outside the target performance range. When the one or more performance values are outside the target performance range, the electronic device may determine that the target hardware does not satisfy the target performance. In yet another example, the electronic device may determine, in the performance data, whether a first performance value is included within a first target performance range and a second performance value is outside a second target performance range.

The target performance range may be at least one of a range defined by an upper performance limit and a lower performance limit. For example, when the target performance range is related to a temperature, the target performance range may be a range less than or equal to a predetermined threshold temperature (e.g., an upper limit temperature). As another example, when the target performance range is related to an execution time, the target performance range may be a range less than or equal to a predetermined threshold time (e.g., an upper limit time). However, the foregoing examples are to help with the understanding of the target performance range, and examples are not limited thereto.

In operation 450, the electronic device may adjust a specification parameter of the target hardware in response to the one or more performance values being outside the target performance range. For example, when a performance value of a factor does not reach the target performance range, the electronic device may adjust a specification parameter corresponding to the performance value. When an observed execution time exceeds a threshold time, the electronic device may increase at least one of a clock rate (e.g., a clock rate of the processor or a clock rate of an accelerator) of hardware, the number of cores, a bandwidth, and an input voltage. When an observed temperature exceeds a threshold temperature, or an observed power consumption exceeds a threshold power consumption, the electronic device may decrease at least one of the clock rate of the hardware, the number of cores, the bandwidth, and the input voltage. In response to operation 450 being performed, the electronic device may again, in operation 430, perform simulation based on the second-level simulator again by using the adjusted specification parameter.

According to an embodiment, the electronic device may terminate simulation when the performance data satisfies the target performance (e.g., when the observed execution time is less than a target execution time). For example, the electronic device may determine a specification parameter currently set for the target hardware in response to the performance value of the performance data being included within the target performance range. The electronic device may output that the specification parameter currently set for the target hardware includes the target performance through a display.

Accordingly, the electronic device may present expected performance, through simulation, in a target system desired by a customer when developing components. The electronic device may verify whether a designed target system satisfies the customer's specifications and suggest performance to satisfy the customer's specifications.

FIG. 5 illustrates an example of a method of adjusting a specification of each piece of hardware by using profile data and a second-level simulator.

In operation 510, an electronic device (e.g., the electronic device 900 of FIG. 9 and/or the electronic device 1000 of FIG. 10) may execute a workload through a system-level simulator. As described above with reference to FIGS. 3 and 4, the electronic device may obtain a profile for each piece of hardware. However, operations that may be performed and information that may be collected may vary depending on the types of hardware models. Profile data 520 on a hardware model may include information corresponding to the type of the hardware model.

For example, when the target hardware is a processor, profile data 521 on the processor (e.g., a CPU) may include at least one of processor utilization (e.g., a ratio of an operation time of the processor to a total execution time of the workload), a temperature of the processor, a processor-memory wait time, a processor-storage wait time, and OS-processor measurable information.

For reference, the OS-hardware measurable information may be information collectable from the OS through an interface defined by a manufacturer of the hardware. A manufacturer of hardware may set information indicating a feature that is determined to be important in the hardware to be collectable from an OS. The OS-hardware measurable information may include, for example, the OS-processor measurable information, OS-accelerator measurable information, OS-memory measurable information, and OS-storage measurable information.

For example, when the target hardware is an accelerator, profile data 522 on the accelerator (e.g., a GPU) may include memory usage (e.g., GPU memory usage) of the accelerator, core utilization (e.g., GPU core utilization) of the accelerator, a temperature (e.g., a GPU temperature) of the accelerator, and the OS-accelerator measurable information.

For example, when the target hardware is a memory, profile data 523 on the memory (e.g., DRAM) may include processor-memory access information (e.g., an access time and an access count), a throughput for the memory, a wait time of the memory due to latency caused by another configuration, and the OS-memory measurable information. The throughput may be, for example, a data amount to be processed per unit time.

For example, when the target hardware is a storage, profile data 524 on the storage may include processor-storage access information (e.g., the access time and the access count), a throughput for the storage, a wait time of the storage due to latency caused by another configuration, and the OS-storage measurable information.

In addition, profile data 525 on other components may include information measurable in a first-level simulator. The other components may include Peripheral Component Interconnect Express (PCIe), a fan, and Ethernet.

For reference, a wait time in the profile data on each component described above may include latency due to an input and an output (e.g., a data input and a data output).

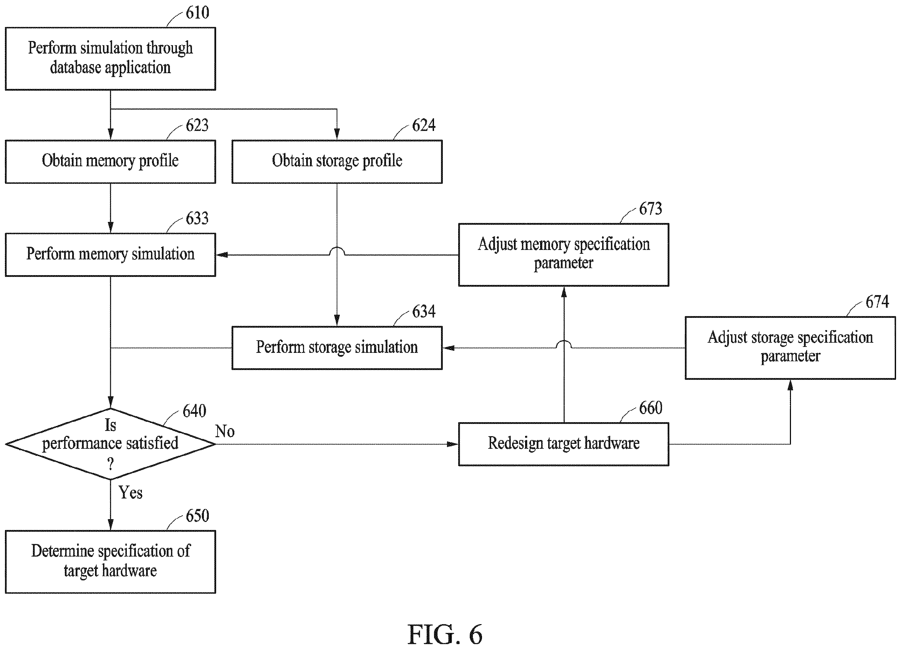

The electronic device may obtain performance data by simulating the profile data 520 through a second-level simulator 530 for hardware corresponding to the profile data 520. For example, the electronic device may perform at least one of processor simulation 531, accelerator simulation 532, memory simulation 533, storage simulation 534, and other device simulation 535. Examples of simulation used for each target system in each workload scenario are described below with reference to FIGS. 6 to 8.

The electronic device may set a detailed specification parameter 570 of the target hardware for the second-level simulator 530 and perform second-level simulation. Hereinafter, examples of detailed specification parameters settable for each type of hardware are described.

A specification parameter 571 settable in the second level model for the processor may include at least one of a clock rate, a cache size, the number of cores, the number of threads, and other information on the processor. The processor may be implemented as, for example, a CPU.

A specification parameter 572 settable in the second level model for the accelerator may include at least one of the number of cores, a clock rate of a core, a clock rate of the memory, Teraflops (Tflops), a memory bus, a bandwidth, input voltage information, and other information on the accelerator. For example, the accelerator may be implemented as the GPU.

Specification parameters 573 settable in the second level model for the memory may include at least one of a data rate, a burst length, a page size, row address information, column address information, a mean time between failures (MTBF), the input voltage information, and other information on the memory. The memory may be implemented as, for example, a DRAM.

A specification parameter 574 settable in the second model for the storage may include at least one of a sequential read speed, a sequential writing speed, a random read speed, a random writing speed, the MTBF, the input voltage information, and other information on the storage.

A specification parameter 575 of other devices may include information collectable on the other devices.

When performance is determined to be satisfied in operation 540, the electronic device may fix (e.g., determine) the specification of the target hardware in operation 550. When the performance is not satisfied in operation 540, the electronic device may adjust the specification parameter 570 by redesigning the target hardware in operation 560. The electronic device may perform the second-level simulation again by using the adjusted specification parameter 570 as described in FIGS. 3 and 4.

According to an embodiment, the electronic device of one or more embodiments may use the same profile data 520 by repeating the second-level simulation. For example, the electronic device may perform the second-level simulation in response to setting a first specification parameter for the target hardware. When the performance data that is a result of the second-level simulation does not reach target performance, the electronic device may set a second specification parameter that is different from the first specification parameter for the target hardware. The electronic device may change a specification parameter value set for the target hardware. The electronic device of one or more embodiments may use the same profile data 520 as the profile data 520 used for the second-level simulation based on the first specification parameter for the second-level simulation based on the second specification parameter. By generating the profile data 520 from a macro perspective (e.g., a system perspective), the electronic device of one or more embodiments may not reflect an impact due to a change of a detailed specification parameter from a micro perspective (e.g., an IP-level perspective) on the profile data 520. Accordingly, even when a detailed specification parameter of hardware is in the second-level simulation, the electronic device of one or more embodiments may reuse the profile data 520 without change, thereby rapidly and accurately estimating performance of the system model.

However, examples are not limited to the foregoing example, and the electronic device may change the profile data 520 by sequentially adjusting and/or redesigning pieces of the target hardware included in a system model. For example, the electronic device may repeat the second-level simulation based on profile data until the first target hardware of the system model satisfies the target performance. When the first target hardware satisfies the target performance, the electronic device may determine that the setting of a specification parameter for the first target hardware is completed. When the setting of the specification parameter for the first target hardware is completed, the electronic device may initiate the adjustment and/or redesign of second target hardware that is different from the first target hardware. The electronic device may set a specification parameter determined based on the adjustment described above for the first target hardware in the system model and obtain new profile data by performing the first-level simulation again. The electronic device may output the performance data of the second target hardware by performing the second-level simulation of the second-target hardware according to the new profile data and identify whether the target performance is satisfied based on the performance data and perform redesign. Accordingly, the specification parameter determined in the first target hardware may affect the redesign of the second target hardware.

FIGS. 6, 7, and 8 illustrate examples of a redesign based on simulation and a combination of pieces of hardware by a workload.

FIG. 6 illustrates an example of a database application.

The database application may be a memory intensive database scenario, and target hardware may be a memory and a storage. For example, when the database scenario is an in-memory database (IMDB) that stores pieces of database information in the memory, memory access may be frequent. And when the database scenario is a Not-only Structured Query Language (NoSQL) (e.g., a Cassandra database) that stores the pieces of database information in the storage, access to the storage may be more frequent than the memory access. For example, according to first-level simulation, a memory access count of the IMDB may be about 40 times greater than a memory access count of the NoSQL. Average memory latency of the IMDB may dramatically increase by about 1400 times. Accordingly, an electronic device of one or more embodiments may determine an optimal memory specification and an optimal storage specification for each database scenario.

In operation 610, an electronic device (e.g., the electronic device 900 of FIG. 9 and/or the electronic device 1000 of FIG. 10) may perform simulation (e.g., first-level simulation) through the database application. The electronic device may obtain a memory profile in operation 623 and may obtain a storage profile in operation 624. The electronic device may perform second-level simulation on the memory in operation 633 and perform the second-level simulation on the storage in operation 634.

When the electronic device satisfies performance in operation 640, the electronic device may determine the specification of the target hardware in operation 650. When the performance of the target hardware is insufficient in operation 640, the electronic device may redesign the target hardware in operation 660. The electronic device may adjust a specification parameter of the memory in operation 673 and may adjust a specification parameter of the storage in operation 674. The electronic device may reperform the second-level simulation on each hardware.

The electronic device may determine a value to be set for a specification parameter of the target hardware, based on a comparison between performance data before adjusting the specification parameter and performance data after adjusting the specification parameter. The electronic device may determine a system performance improvement range when a memory bandwidth increases in the specification parameter, based on a difference between pieces of performance data output from a second-level simulator. Accordingly, the electronic device may propose a method of including more memory (e.g., a compute express link (CXL) memory) in the same system.

In addition, the electronic device may determine the system performance improvement range when a memory capacity increases in the specification parameter, based on the difference between the pieces of performance data output from the second-level simulator. Cloud service providers may attract more users when the memory increases. When the memory capacity increases, existing equipment may be better used.

In addition, the electronic device may identify a utilization increase of an existing resource when multiple nodes (e.g., a scalable system) share a large-capacity memory box, based on the performance data output from the second-level simulator. The cloud service providers may provide a virtual system to each user, and the virtual system may include much overlapping memory. Accordingly, the electronic device may design a target system having a specification that may effectively use memory by removing the overlapping memory or may provide information for design. The electronic device may perform the removal of overlapping memory on multiple nodes, besides on the same node. When a method of sharing memory by multiple nodes is proposed based on performance data output by the electronic device, the effect of the method may be verified through the second-level simulation.

For example, the electronic device may obtain profile data by performing a workload providing a cloud storage service through a first-level simulator. In the cloud storage service, a cloud virtual system may use much overlapping memory. Data movement between inter-node memories may occupy a larger proportion than data movement in a node among data movements occurring in the cloud storage service. For example, in profile data, an inter-node-related processor-memory access count and access time may occupy a larger proportion than an intra-node-related processor-memory access count and access time. Since the data movement between inter-node memories occupies a large proportion, a bandwidth of a memory interface (e.g., PCIe^{™}, CXL^{™}, and NVLink^{™}) may largely affect overall cloud performance. When an execution time of a target cloud workload is longer than a target time, the electronic device may repeat simulation until the target time is satisfied by increasing an interface bandwidth of pieces of hardware or decreasing latency of the pieces of hardware.

The electronic device may obtain performance data when some operations are offloaded in the database application and performance data when the operations are not offloaded therein, based on the second-level simulation. For example, the electronic device may determine an operation in which performance improvement greater than or equal to a threshold is identified among operations of the database application to be an operation to be offloaded. The electronic device may decrease a bandwidth that is a bottleneck of the target system. The electronic device may determine an operation to be offloaded when designing an AXDIMM.

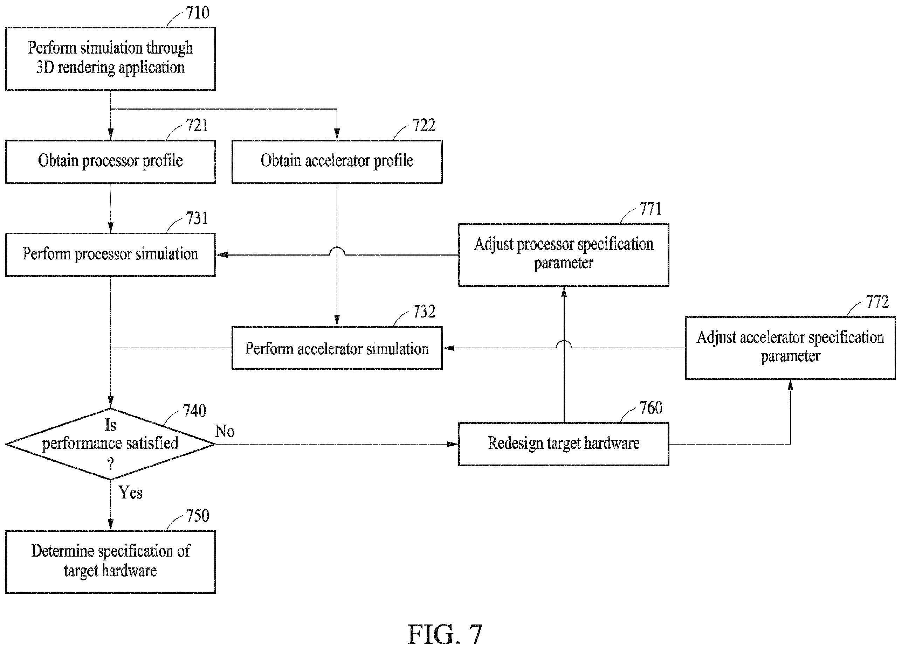

FIG. 7 illustrates an example of a 3D rendering application.

Simulations may be performed on a processor and an accelerator through the 3D rendering application.

In operation 710, the electronic device may perform simulation (e.g., the first-level simulation) through the 3D rendering application. The electronic device may obtain the profile data of the processor in operation 721 and the profile data of the accelerator in operation 722. The electronic device may perform simulation (e.g., the second-level simulation) of the processor based on the profile data thereof in operation 731 and perform simulation (e.g., the second-level simulation) of the accelerator based on the profile data thereof in operation 732.

In operations 740, 750, 760, 771, and 772, the electronic device may adjust a specification parameter of each hardware similarly to the description provided with reference to FIG. 6 and repeat the second-level simulation.

For example, the electronic device may obtain the usability information of the processor (e.g., a CPU) and the usability information of the accelerator (e.g., a GPU) in the first-level simulation as the profile data. The electronic device may adjust the specification parameter of the processor (e.g., the CPU) and the specification parameter of the accelerator (e.g., the GPU) and predict a factor where a bottleneck occurs based on a comparison between results (pieces of performance data) of the second-level simulation.

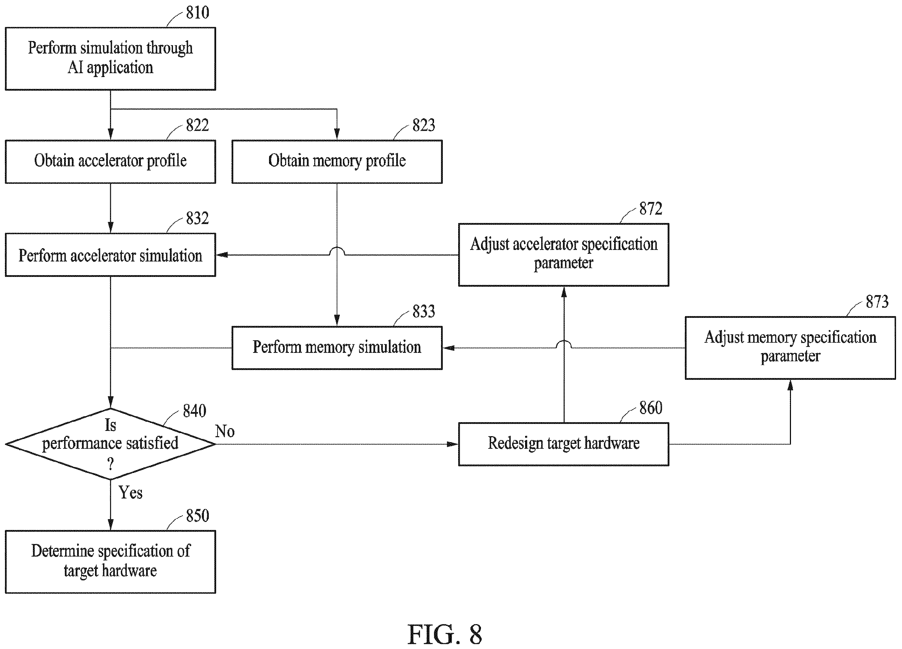

According to an embodiment, the electronic device may simulate a 3D rendering workload in a first-level simulator and obtain profile data. When the 3D rendering workload is continuously shared by inputting and outputting an operation result between the processor and the accelerator (e.g., the CPU and the GPU), a bottleneck may occur according to an operation speed of the processor and an operation speed of the accelerator. For example, when the operation speed of the processor reaches a maximum operation speed of the processor, and the operation speed of the accelerator is less than a maximum operation speed of the accelerator, an analysis may suggest a bottleneck has occurred in the processor. However, when the part of the processor that has the bottleneck is not identified, the electronic device may predict the bottleneck by monitoring a change (e.g., an increase or a decrease) of a performance result value of the processor by changing specification parameters related to the processor in the second-level simulation. The electronic device may use a Monte Carlo simulation method. For example, when a time when the processor completely executes the profile data is greater than a target time, and an execution time does not change even if a clock rate and the number of cores increase, the clock rate and the number of cores may not be the bottleneck. On the other hand, when the execution time decreases when a cache size changes, a cache of the processor may be predicted to be the bottleneck. FIG. 8 illustrates an example of an AI application.

Simulations may be performed on the accelerator and the memory through the AI application.

In operation 810, the electronic device may perform simulation (e.g., the first-level simulation) through the AI application. The electronic device may obtain the profile data of the accelerator in operation 822 and the profile data of the memory in operation 823. The electronic device may perform simulation (e.g., the second-level simulation) of the accelerator based on the profile data thereof in operation 832 and perform simulation (e.g., the second-level simulation) of the memory based on the profile data thereof in operation 833.

In operations 840, 850, 860, 872, and 873, the electronic device may adjust a specification parameter of each hardware similarly to the descriptions provided with reference to FIGS. 6 and 7 and repeat the second-level simulation.

For example, the electronic device may obtain the usability information of the accelerator and the usability information of the memory in the first-level simulation as the profile data. The electronic device may adjust the specification parameter of the accelerator and the specification parameter of the memory and predict a factor where a bottleneck occurs based on a comparison between results (pieces of performance data) of the second-level simulation.

When an execution time of the AI application is greater than a target time, and a throughput of the accelerator (e.g., the GPU) per unit time is close to the highest specification, the bottleneck may be predicted to occur in the accelerator. Conversely, when the throughput of the accelerator per unit time does not reach the highest specification, the bottleneck may be expected to be in the memory. For example, when the electronic device executes the profile data through the second-level simulator, and other specification parameters related to the accelerator do not significantly affect a completion time of executing the profile data but only affects the number of cores, the GPU number of the accelerator may be the bottleneck.

FIGS. 9 and 10 illustrate examples of a configuration of an electronic device.

Referring to FIG. 9, the electronic device 900 may include the processor 910 (e.g., one or more processors) and the memory 920 (e.g., one or more memories).

The processor 910 may obtain profile data on operations of target hardware in response to performing a workload in a first-level simulator and output performance data of the target hardware in response to simulating the profile data in a second-level simulator. However, the operation of the processor 910 is not limited thereto, and the processor 910 may perform the operations described above with reference to FIGS. 1 to 8 in parallel or in time series.

The memory 920 may store the first-level simulator for a system model combining pieces of hardware and the second-level simulator for the target hardware among the pieces of hardware. For example, the memory 920 may be or include a non-transitory computer-readable storage medium storing instructions that, when executed by the processor 920, configure the processor 920 to perform any one, any combination, or all of the operations and methods described herein with reference to FIGS. 1-8.

Referring to FIG. 10, the electronic device 1000 (e.g., a computing device) may include an input interface 1010, the processor 1020 (e.g., one or more processors), the memory 1030 (e.g., one or more memories), a display 1040, and a communication circuit 1050. The electronic device 1000 may be a device configured to perform the simulation described above with reference to FIGS. 1 to 9, the estimation of performance data based on the simulation, and adjustment of specification parameters of hardware. The electronic device 1000 may be, for example, the computing device.

The input interface 1010, the processor 1020, the memory 1030, the display 1040, and the communication circuit 1050 may communicate with one another through a communication bus.

The input interface 1010 may receive an input from a user through a haptic, video, audio, or touch input. The input interface 1010 may include, for example, a keyboard, a mouse, a touch screen, a microphone, or any other device that detects an input from the user and transmits the detected input.

The processor 1020 may execute functions and instructions in the electronic device 1000 (e.g., the computing device). For example, the processor 1020 may process instructions stored in the memory 1030. The processor 1020 may perform the one or more operations described above with reference to FIGS. 1 through 9.

The memory 1030 may store information or data for execution of the processor 1020. For example, the memory 1030 may include the simulators, hardware models, and system models described above. The memory 1030 may include a non-transitory computer-readable storage medium or a non-transitory computer-readable storage device. The memory 1030 may store the instructions to be executed by the processor 1020 and may store related information while software (e.g., a simulator) and/or an application is executed by the electronic device 1000. For example, the memory 1030 may be or include a non-transitory computer-readable storage medium storing instructions that, when executed by the processor 1020, configure the processor 1020 to perform any one, any combination, or all of the operations and methods described herein with reference to FIGS. 1-9.

The display 1040 may visually provide an output of the electronic device 1000 to the user. For example, the display 1040 may output performance data estimated by the processor 1020.

The communication circuit 1050 may communicate with an external device through a wired or wireless network. The communication circuit 1050 may receive the above-described simulators, hardware models, and system models from the external device (e.g., a server).

The electronic device 1000 may output the performance data as a guide to determine a product specification in an operation of designing a product (e.g., a semiconductor). For example, the electronic device 1000 may estimate the performance data to design the product for a scalable system (e.g., a data center, a cloud server, and a supercomputer).

The electronic devices, processors, memories, input interfaces, displays, communication circuits, electronic device 900, processor 910, memory 920, electronic device 1000, input interface 1010, processor 1020, memory 1030, display 1040, communication circuit 1050, and other apparatuses, devices, units, modules, and components disclosed and described herein with respect to FIGS. 1-10 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-10 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

The present disclosure also applies to the following clauses:
Clause 1. An electronic device, comprising one or more processors configured to: generate profile data on operations of target hardware among pieces of hardware in response to performing a workload in a first-level simulator for a system model combining the pieces of hardware; and output performance data of the target hardware in response to simulating the profile data in a second-level simulator for the target hardware.
Clause 2. The electronic device of clause 1, wherein, for the outputting of the performance data, the one or more processors are further configured to determine a performance value of the performance data in response to monitoring any one or any combination of any two or more of an operation time of the target hardware, operation power of the target hardware, an operation temperature of the target hardware, and a failure of the target hardware while operating the target hardware according to the profile data through the second-level simulator.
Clause 3. The electronic device of clause 1 or 2, wherein, for the outputting of the performance data, the one or more processors are further configured to determine a statistical value of values monitored in time series while the target hardware is operated according to the profile data through the second-level simulator to be a performance value.
Clause 4. The electronic device of any of the clauses 1-3, wherein the one or more processors are further configured to: determine whether a performance value of the performance data is comprised within a range of target performance; adjust a specification parameter of the target hardware in response to the performance value being outside the range of the target performance; and perform simulation based on the second-level simulator again by using the adjusted specification parameter.
Clause 5. The electronic device of any of the clauses 1-4, wherein, for the generating of the profile data, the one or more processors are further configured to generate the profile data by monitoring that requests for performing the workload in the first-level simulator are distributed to the pieces of hardware according to a policy of the system model.
Clause 6. The electronic device of any of the clauses 1-5, wherein the target hardware is another processor, and the profile data on the other processor comprises any one or any combination of any two or more of processor utilization, a temperature of the other processor, a processor-memory wait time, a processor-storage wait time, and operating system (OS)-processor measurable information.
Clause 7. The electronic device of any of the clauses 1-5, wherein the target hardware is an accelerator, and the profile data on the accelerator comprises any one or any combination of any two or more of memory usage of the accelerator, core utilization of the accelerator, a temperature of the accelerator, and OS-accelerator measurable information.
Clause 8. The electronic device of any of the clauses 1-5, wherein the target hardware is a memory, and the profile data on the memory comprises any one or any combination of any two or more of processor-memory access information, a throughput for the memory, a wait time of the memory due to latency caused by another configuration, and OS-memory measurable information.
Clause 9. The electronic device of any of the clauses 1-5, wherein the target hardware is a storage, and the profile data on the storage comprises any one or any combination of any two or more of processor-storage access information, a throughput for the storage, a wait time of the storage due to latency caused by another configuration, and OS-storage measurable information.
Clause 10. A processor-implemented method, the method comprising: generating profile data on operations of target hardware among pieces of hardware in response to performing a workload in a first-level simulator for a system model combining the pieces of hardware; and outputting performance data of the target hardware in response to simulating the profile data in a second-level simulator for the target hardware.
Clause 11. The method of clause 10, wherein the outputting of the performance data comprises determining a performance value of the performance data in response to monitoring any one or any combination of any two or more of an operation time of the target hardware, operation power of the target hardware, an operation temperature of the target hardware, and a failure of the target hardware while operating the target hardware according to the profile data through the second-level simulator.
Clause 12. The method of clause 10 or 11, wherein the outputting of the performance data comprises determining a statistical value of values monitored in time series while the target hardware is operated according to the profile data through the second-level simulator to be a performance value.
Clause 13. The method of any of the clauses 10-12, further comprising: determining whether a performance value of the performance data is comprised within a range of target performance; adjusting a specification parameter of the target hardware in response to the performance value being outside the range of the target performance; and performing simulation based on the second-level simulator again by using the adjusted specification parameter.
Clause 14. The method of any of the clauses 10-13, wherein the generating of the profile data comprises generating the profile data by monitoring that requests for performing the workload in the first-level simulator are distributed to the pieces of hardware according to a policy of the system model.
Clause 15. The method of any of the clauses 10-14, wherein the target hardware is a processor, and the profile data on the processor comprises any one or any combination of any two or more of processor utilization, a temperature of the processor, a processor-memory wait time, a processor-storage wait time, and OS-processor measurable information.
Clause 16. The method of any of the clauses 10-14, wherein the target hardware is an accelerator, and the profile data on the accelerator comprises any one or any combination of any two or more of memory usage of the accelerator, core utilization of the accelerator, a temperature of the accelerator, and OS-accelerator measurable information.
Clause 17. The method of any of the clauses 10-14, wherein the target hardware is a memory, and the profile data on the memory comprises any one or any combination of any two or more of processor-memory access information, a throughput for the memory, a wait time of the memory due to latency caused by another configuration, and OS-memory measurable information.
Clause 18. A non-transitory computer-readable storage medium storing instructions that, when executed by one or more processors, configure the one or more processors to perform the method of any of the clauses 10-17.
Clause 19. An electronic device comprising: one or more processors configured to: generate profile data on operations of target hardware among pieces of hardware in response to performing a workload in a first-level simulator for a system model combining the pieces of hardware; and adjust a specification parameter of the target hardware based on performance data of the target hardware generated based on a result of simulating the profile data in a second-level simulator for the target hardware.
Clause 20. The electronic device of clause 19, wherein the one or more processors are configured to: perform the workload in the first level simulator based on one or more specification parameters of the target hardware; and simulate the profile data in the second-level simulator for the target hardware based on one or more detailed specification parameters of the target hardware not included in the one or more specification parameters.

While this disclosure includes specific examples, it will be apparent after an understanding of the disclosure of this application that various changes in form and details may be made in these examples without departing from the scope of the appended claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the appended claims, i.e., all variations within the scope of the appended claims are to be construed as being included in the disclosure.

## Claims

1. An electronic device, comprising one or more processors configured to:
generate profile data on operations of target hardware among pieces of hardware in response to performing a workload in a first-level simulator for a system model combining the pieces of hardware; and
generate performance data of the target hardware in response to simulating the generated profile data in a second-level simulator for the target hardware.

2. The electronic device of claim 1, wherein, for the generating of the performance data, the one or more processors are further configured to determine a performance value of the performance data in response to monitoring any one or any combination of any two or more of an operation time of the target hardware, operation power of the target hardware, an operation temperature of the target hardware, and a failure of the target hardware while operating the target hardware according to the profile data through the second-level simulator.

3. The electronic device of claim 1 or 2, wherein, for the generating of the performance data, the one or more processors are further configured to determine a statistical value of values monitored in time series while the target hardware is operated according to the profile data through the second-level simulator to be a performance value.

4. The electronic device of any of the previous claims, wherein the one or more processors are further configured to adjust a specification parameter of the target hardware based on the performance data.

5. The electronic device of claim 4, wherein the one or more processors are configured to:
perform the workload in the first level simulator based on one or more specification parameters of the target hardware; and
simulate the profile data in the second-level simulator for the target hardware based on one or more detailed specification parameters of the target hardware not included in the one or more specification parameters.

6. The electronic device of any of the previous claims, wherein the one or more processors are further configured to:
determine whether a performance value of the performance data is comprised within a range of target performance;
adjust a specification parameter of the target hardware in response to the performance value being outside the range of the target performance; and
perform simulation based on the second-level simulator again by using the adjusted specification parameter.

7. The electronic device of any of the previous claims, wherein, for the generating of the profile data, the one or more processors are further configured to generate the profile data by monitoring that requests for performing the workload in the first-level simulator are distributed to the pieces of hardware according to a policy of the system model.

8. The electronic device of any of the claims 1-6, wherein the target hardware is another processor, and wherein the profile data on the other processor comprises any one or any combination of any two or more of processor utilization, a temperature of the other processor, a processor-memory wait time, a processor-storage wait time, and operating system (OS)-processor measurable information.

9. The electronic device of any of the claims 1-6, wherein the target hardware is an accelerator, and wherein the profile data on the accelerator comprises any one or any combination of any two or more of memory usage of the accelerator, core utilization of the accelerator, a temperature of the accelerator, and OS-accelerator measurable information.

10. The electronic device of any of the claims, wherein the target hardware is a memory or storage, and wherein the profile data on the memory or storage comprises any one or any combination of any two or more of processor-memory or processor-storage access information, a throughput for the memory or storage, a wait time of the memory or storage due to latency caused by another configuration, and OS-memory or OS-storage measurable information.

11. A processor-implemented method, comprising:
generating profile data on operations of target hardware among pieces of hardware in response to performing a workload in a first-level simulator for a system model combining the pieces of hardware; and
generating performance data of the target hardware in response to simulating the generated profile data in a second-level simulator for the target hardware.

12. The method of claim 11, wherein the generating of the performance data comprises:
determining a performance value of the performance data in response to monitoring any one or any combination of any two or more of an operation time of the target hardware, operation power of the target hardware, an operation temperature of the target hardware, and a failure of the target hardware while operating the target hardware according to the profile data through the second-level simulator; and/or
determining a statistical value of values monitored in time series while the target hardware is operated according to the profile data through the second-level simulator to be a performance value.

13. The method of claim 11 or 12, wherein the generating of the profile data comprises generating the profile data by monitoring that requests for performing the workload in the first-level simulator are distributed to the pieces of hardware according to a policy of the system model; and/or
wherein the method further comprises:
determining whether a performance value of the performance data is comprised within a range of target performance;
adjusting a specification parameter of the target hardware in response to the performance value being outside the range of the target performance; and
performing simulation based on the second-level simulator again by using the adjusted specification parameter.

14. The method of any of the claims 11-13, wherein the target hardware is a processor, and wherein the profile data on the processor comprises any one or any combination of any two or more of processor utilization, a temperature of the processor, a processor-memory wait time, a processor-storage wait time, and OS-processor measurable information; or
wherein the target hardware is an accelerator, and wherein the profile data on the accelerator comprises any one or any combination of any two or more of memory usage of the accelerator, core utilization of the accelerator, a temperature of the accelerator, and OS-accelerator measurable information; or
wherein the target hardware is a memory or storage, and wherein the profile data on the memory or storage comprises any one or any combination of any two or more of processor-memory or processor-storage access information, a throughput for the memory or storage, a wait time of the memory or storage due to latency caused by another configuration, and OS-memory or OS-storage measurable information.

15. A non-transitory computer-readable storage medium storing instructions that, when executed by one or more processors, configure the one or more processors to perform the method of claim 11-14.
